(19) Europäisches Patentamt
European Patent Office
Office européen des brevets

(11) EP 0 737 856 B1

(12) **EUROPEAN PATENT SPECIFICATION**

(45) Date of publication and mention
of the grant of the patent:
**28.04.2010 Bulletin 2010/17**

(51) Int Cl.:
*G01N 21/21* (2006.01)    *G01J 3/447* (2006.01)

(21) Application number: **96301670.4**

(22) Date of filing: **12.03.1996**

(54) **A method of investigating samples by changing polarisation**

Verfahren zur Probenuntersuchung mittels Änderung der Polarisation

Procédé pour examiner des échantillons à partir d'un changement de polarisation

(84) Designated Contracting States:
**AT CH DE ES FR GB IT LI NL SE**

(30) Priority: **14.04.1995 US 422346**
**16.08.1995 US 515738**

(43) Date of publication of application:
**16.10.1996 Bulletin 1996/42**

(73) Proprietor: **J.A. WOOLLAM CO. INC.**
**Lincoln,**
**Nebraska 68508 (US)**

(72) Inventors:
• **Green, Steven E.**
**Lincoln,**
**Nebraska 68502 (US)**
• **Woollam, John A.**
**Lincoln,**
**Nebraska 68506 (US)**
• **Herzinger, Craig M.**
**Lincoln,**
**Nebraska 68510 (US)**
• **Ducharme, Stephen P.**
**Lincoln,**
**Nebraska 68506 (US)**
• **Johs, Blaine D.**
**Lincoln,**
**Nebraska 68502 (US)**

(74) Representative: **Needle, Jacqueline**
**Beck Greener**
**Fulwood House**
**12 Fulwood Place**
**London**
**WC1V 6HR (GB)**

(56) References cited:
EP-A- 0 324 311     WO-A-96/29583
US-A- 4 105 338     US-A- 5 045 701
US-A- 5 245 478     US-A- 5 329 357
US-A- 5 373 359     US-A- 5 381 253

• RAUH M ET AL: "Ellipsometric studies on the oxidation of thin copper films" THIN SOLID FILMS, vol. 233, no. 1-2, 12 October 1993, pages 289-292, XP000397768 ISSN 0040-6090
• CHINDAUDOM P ET AL: "Determination of the optical function n( lambda ) of vitreous silica by spectroscopic ellipsometry with an achromatic compensator" APPLIED OPTICS, vol. 32, no. 31, 1 November 1993, pages 6391-6398, XP000403655 ISSN 0003-6935
• NEE S-M F: "Error reductions for a serious compensator imperfection for null ellipsometry" JOURNAL OF THE OPTICAL SOCIETY OF AMERICA A (OPTICS AND IMAGE SCIENCE), vol. 8, no. 2, February 1991, pages 314-321, XP000175123 ISSN 0740-3232
• PATENT ABSTRACTS OF JAPAN vol. 009, no. 167 (P-372), 12 July 1985 & JP 60 043609 A (NIPPON VICTOR), 8 March 1985
• PATENT ABSTRACTS OF JAPAN vol. 007, no. 113 (P-197), 18 May 1983 & JP 58 035425 A (CANON), 2 March 1983
• COLLINS R W: "Automatic rotating element ellipsometers: calibration, operation, and real-time applications" REVIEW OF SCIENTIFIC INSTRUMENTS, vol. 61, no. 8, August 1990, pages 2029-2062, XP000149453 ISSN 0034-6748
• HAUGE P S: "Recent developments in instrumentation in ellipsometry" SURFACE SCIENCE, vol. 96, no. 1-3, June 1980, pages 108-140, XP000195533 ISSN 0039-6028

• JELLISON G E: "Data analysis for spectroscopic ellipsometry" THIN SOLID FILMS, vol. 234, 1 January 1993, pages 416-422, XP000569726 ISSN 0040-6090

• JOHS B: "Regression calibration method for rotating element ellipsometers" THIN SOLID FILMS, vol. 234, 1 January 1993, pages 395-398, XP000569725 ISSN 0040-6090

**Description**

The present invention relates to a method of investigating the physical and optical properties of a sample system by monitoring changes effected in the polarisation state of a beam of light.

Whilst the present invention can utilise any ellipsometer or polarimeter and the like system, spectroscopic ellipsometers (SE's) will primarily be utilized.

Spectroscopic ellipsometer (SE) systems for use in the investigation and characterization of physical and optical properties of sample systems over a large range of wavelengths, are well known. Briefly, such (SE) systems operate by monitoring changes effected in the polarization state of a beam of light when said beam of light is caused to interact with a sample system (SS).

Spectroscopic ellipsometer (SE) systems typically comprise a polarization state generator, and a polarization state detector. In use, the polarization state generator causes a beam of light in an intended state of polarization to be incident upon a sample system (SS) at a set angle of incidence (AOI), and the polarization state detector monitors a reflected and/or transmitted beam of light which emerges from said sample system (SS) and at least partially determines the polarization state thereof.

Spectroscopic ellipsometer (SE) systems fall into general categories such as:

a. rotatable element nulling ellipsometers (RENE);
b. rotatable element automated nulling ellipsometers (REANE));
c. phase modulation ellipsometers (PME);
d. rotating analyzer ellipsometers (RAE);
e. rotating polarizer ellipsometers (RPE);
f. rotating compensator ellipsometers (RCE);
g. rotating polarizer and analyzer ellipsometers (RPAE);
h. rotating polarizer and analyzer, fixed compensator ellipsometers (RPAFCE);
i. rotating analyzer and compensator, fixed polarizer ellipsometers (RACFPE);
j. rotating polarizer and compensator, fixed analyzer ellipsometers (RPCFAE);
k. rotating analyzer, fixed polarizer and compensator ellipsometers (RAFPCE);
l. rotating polarizer, fixed analyzer and compensator ellipsometers (RPFACE);
m. rotating compensator, fixed analyzer and polarizer ellipsometers (RCFAPE);
n. rotating analyzer and compensator, fixed and polarizer (RACFPE).

Generally, all ellipsometer systems include elements comprising:

a. a source of a beam of light;
b. a means for imposing an intended state of polarization thereto;
c. a detector system for use in developing a signal from said beam of light after it interacts with the sample system, which signal contains information that allows determination of optical and physical properties of said sample system, and
d. a means for analyzing said developed signal after it interacts with a sample system.

APPLIED OPTICS, vol. 32, no. 31, 1 November 1993, pages 6391-6398, XP000403655 ISSN 0003-6935; CHINDAUDOM P ET AL: "Determination of the optical function n( lambda ) of vitreous silica by spectroscopic ellipsometry with an achromatic compensator" describes the use of rotating - element spectroscopic ellipsometry (SE) to study dielectric materials utilising a rotating analyzer ellipsometer (RAE) with an achromatic compensator. A sample is inserted and aligned at the desired angle of incidence and then PSI and DELTA ellipsometric parameters can be determined over the set wavelength range. The data is analysed using a linear regression analysis technique.

JOURNAL OF THE OPTICAL SOCIETY OF AMERICA A (OPTICS AND IMAGE SCIENCE), vol. 8, no. 2, February 1991, pages 314-321, XP000175123 ISSN 0740-3232; NEE S-M F: "Error reductions for a serious compensator imperfection for null ellipsometry" describes a null ellipsometer incorporating a compensator such as an achromatic compensator or a Babinet compensator. Deviations of retardation caused by compensator imperfection are described by error equations which were solved to provided analytic solutions which agreed with computer simulation results.

US-A-5,245,478 describes a Berek compensator which can be rotated and tilted by way of a tilt cylinder. The compensator is inserted within a conventional optical mount and set to a zero tilt position. Once a radiation source has been energised, the desired phase shift can be obtained by rotation of the tilt cylinder.

THIN SOLID FILMS, vol. 233, no. 1-2, 12 October 1993, pages 289-292, XP000397768 ISSN 0040-6090 RAUH M. ET AL "Ellipsometric studies on the oxidation of thin copper films", D2, describes an automated ellipsometer to study the oxidation of thin copper films which utilises a Soleil-Babinet compensator kept in a quarter-wave position during

EP 0 737 856 B1

wavelength variation.

More specifically, D2 describes a method of investigating the physical and optical properties of a sample system by monitoring changes effected in the polarisation state of a beam of light, the method comprising the steps of providing a beam of light from a source of light (LS); imposing a desired state of polarisation upon said beam of light; orienting said beam of light so that it interacts with a sample system (SS) to effect change in the polarisation state of the beam of light; monitoring a polarisation state of the beam of light after it interacts with the sample system; and deriving from the state of polarisation of the light beam, information as to the physical and optical properties of the sample system; passing the light beam through a variable retarder which, with a sample system per se (SS), forms a composite sample system as seen during the monitoring step, and making modifications so that at least the DELTA of said composite sample system is placed within a range in which the PSI and DELTA of said composite sample can be investigated.

Compensators or retarders may have undesirable effects on the polarization state of a polarised beam of light, including introducing artifacts.

There is a need for a method capable of improving the data acquisition capability of spectroscopic ellipsometer and like systems.

According to the present invention, a method of investigating the physical and optical properties of a sample system as defined above is **characterised in that** the variable retarder is a Berek - type variable retarder, and in that the Berek - type variable retarder is adjusted such that composite sample system PSI and DELTA determining data is obtained, the PSI and DELTA of the sample system per se being arrived at via a procedure of indirect mathematical regression applied to multiple composite sample system PSI and DELTA determining data points, which procedure compensates for the presence of said at least one Berek-type variable retarder; wherein the Berek-type variable retarder is adjusted by orienting the retarder to take up variable retarder positions at each of which ellipsometric ALPHA-ellipsometric BETA pair values are collected, the mathematical regression being applied to the ALPHA-BETA data pairs to enable the evaluation of PSI and DELTA.

Embodiments of a method of the invention enables sample system PSI and DELTA values to be accurately determined whilst the sensitivity of a detector to noise and measurement errors is decreased.

In an embodiment, the method uses an ellipsometer comprising said source of light, the polariser, the analyser and the detector, and wherein either the polariser or the analyser is a rotating element, and wherein the step of imposing a desired state of polarisation upon said beam of light is accomplished by passing said light beam through a polariser; and where the step of monitoring a polarisation state of the beam of light after it interacts with the sample system is accomplished by passing said light beam through an analyser and into a detector.

In an alternative embodiment, the method uses a modulation ellipsometer, wherein the step of imposing a desired state of polarisation upon said beam of light is accomplished by passing said light beam through a polariser, and then through a modulation element; and wherein the step of monitoring a polarisation state of the beam of light after it interacts with the sample system is accomplished by passing said light beam through an analyser and into a detector.

Embodiments of the invention will now be described by way of example with reference to the accompanying drawing in which:-

Fig. 1 shows a variable angle spectroscopic ellipsometer (VASE-Registered Trademark), system,

Fig. 2 shows the typical variable angle spectroscopic ellipsometer (VASE) system of Fig. 1 with variable retarders added between the polarizer and rotating analyzer,

Figs 3a and 3b show azimuthal and elevational "tilts" respectively which can be applied to Berek-type variable retarders, incorporated within the system of Fig. 2,

Fig. 4a shows a retarder with a light beam incident thereon perpendicular to the surface thereof,

Fig. 4b shows Babinet and Soleil-type variable retarder systems,

Fig. 4c indicates electro-optical-effect Kerr, Pockel and liquid crystal-type variable retarders, as well as magnetic-Faraday-effect Voigt and Cotton-Mouton-type retarders,

Figs. 4d and 4e show multi-tilt Berek-type variable retarder systems,

Figs. 5a to 5d show plots of sample system characterizing PSI and DELTA values as a function of wavelength of light utilized in a beam of polarized light, applied to a sample system at seventy-five (75) and at thirty (30) degrees angles of incidence, as arrived at by various modes of operation,

Fig. 6 shows DELTA values as a function of the angle of incidence of a beam of polarized light to a thick glass sample system, said DELTA values being determined by a method of the invention,

Figs. 7a to 7f show plots of sample system characterizing PSI and DELTA values as a function of wavelength of light utilized in a beam of polarized light, applied to a sample system at seventy-five (75) and at thirty (30) degrees angles of incidence,

Fig. 8 shows a basic modulation ellipsometer system, and

Fig. 9 shows a portion of the basic modulation ellipsometer system of Fig. 8 including a variable retarder.

When using an ellipsometer, a measured ellipsometric relative magnitude ratio of orthogonal components, (hereinafter assumed as "P" and "S" components) may be set simultaneously with a measured ellipsometric phase angle between said orthogonal "P" and "S" components in a polarized beam of light. The "P" component is that component of a polarized beam of light in a plane defined by a normal to a sample system surface, and the incident and reflected or transmitted beams, while the "S" component is perpendicular thereto and parallel to the surface of the sample system. The purpose of controlling said polarization state of said polarized beam of light is to cause said measured ellipsometric relative magnitude ratio of "P" and "S" components, and said measured retardation phase angle between said "P" and "S" components to be in ranges in which a sample system characterizing PSI and DELTA monitoring polarization state detector demonstrates decreased sensitivity to noise and errors in measurement etc. thereof. When combined with compensating for, (e.g. subtracting out or otherwise), the influence of the presence of the system on measured PSI and DELTA values, a method as described herein enables accurate sensitive measurement of sample system characterizing PSI and DELTA values, in ranges otherwise difficult, if not impossible, to investigate. This is accomplished by enabling measurement of PSI and DELTA values, or parameters determinative thereof, in ranges in which they are not sensitive to noise and measurement errors.

For instance, methods as described allow usably accurate and precise sample system characterizing DELTA values to be determined near zero (0.0) and one-hundred-eighty (180) degrees in rotating analyzer ellipsometer (RAE), rotating polarizer (RPE), and modulation element ellipsometers (MEE's), and accurate PSI values near forty-five (45) degrees can also be determined in (MEE's).

As a specific example, the applicant's variable angle spectroscopic ellipsometer (VASE-Registered Trademark), allows application of a polarized beam of light of one (1) wavelength at a time to a sample system (SS), at one angle of incidence (AOI) at a time. In use, various (AOI's) are utilized, as are various wavelengths at said various (AOI's), to acquire a data set, use of which allows calculation of sample system PSI and DELTA characterizing parameter constant values.

In addition, the applicant manufactures M-44, and M-88 etc. rotating analyer ellipsometer (RAE) systems which allow simultaneous application and analysis of a multiplicity (e.g. forty-four (44) or eighty-eight (88) etc.), of wavelengths in a polarized beam of light. Whilst the present invention was developed utilizing a (VASE) system, it can also be applied to the M-44 and M-88 etc. systems.

Ellipsometers operate by detecting the change in polarization state caused in a beam of polarized light, when said beam of polarized light is caused to interact with a sample system (SS).

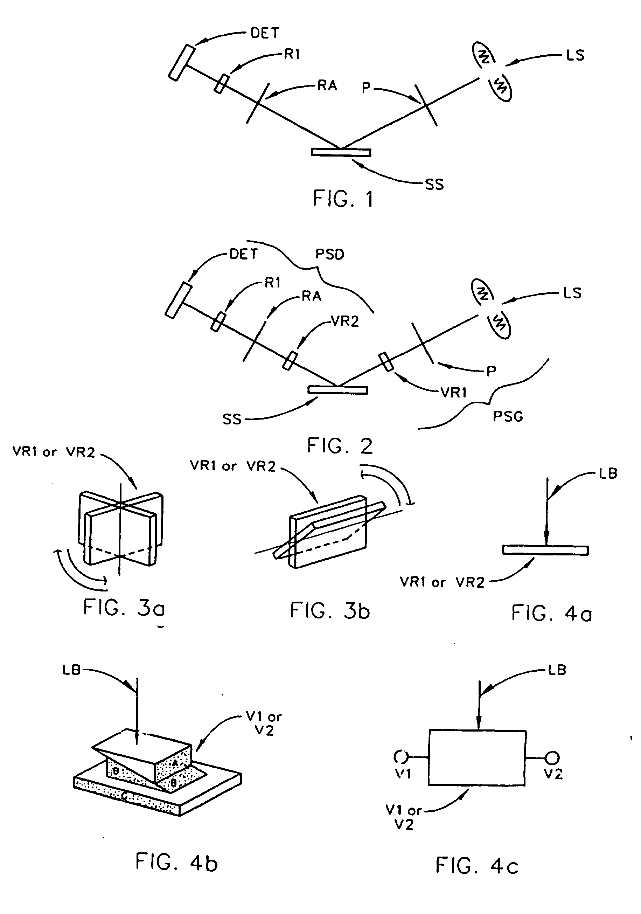

Figure 1 illustrates the applicant's rotating analyser ellipsometer (RAE) VASE system which comprises:

1. A polarization state generator system (PSG) comprising:

    a. a light source (LS), which provides a beam of light. Light can typically comprise a multiplicity of wavelengths, which wavelengths are utilised one at a time;
    b. a polarizer (P) which serves to set a state of polarization in said beam of light by adjustment of the polarizer angle (POL) thereof; and
    c. means for causing said polarized beam of light to interact with a sample system (SS), (i.e. a means to set an angle of incidence (AOI).

2. A polarization state detector system (PSD) comprising:

    a. a rotating analyzer (RA) which serves to process said polarized beam of light after it interacts with said sample system (SS), such that a typically modulated intensity, linearly polarized beam of light, is produced; and
    b. a detector system (DET) which measures the intensity waveform of said resulting elliptically polarized typically modulated intensity waveform as a function of time.

A retarder (RI) is also shown in Fig. 1. Such a retarder (RI) is typically not present in a VASE system, but is commonly employed in M44 and M88 systems.

The intensity intensity waveform of an elliptically polarized beam of light entering a rotating analyzer ellipsometer (RAE) detector system (DET), as a function of time, is characterized by a mathematical equation which involves well known measurable ellipsometric ALPHA and BETA parameters in a trigonometric relationship, with the azmuthal angle of said rotating analyzer being the argument of said trigonometric functions. See EQ 1. Equation 1 provides definitions for ellipsometric ALPHA and BETA.

$$I = IO*(I + ALPHA*COS(ANL) + BETA*SIN(ANL));\qquad EQ. 1$$

where "ANL" is the rotating analyzer azimuth angle.

It has been determined that for the "M-44" and M-88" (RAE's), the retarder (R1) identified in Fig. 1 is best be placed after the rotating analyzer and ahead of the detector system (DET) so that, during use, the linearly polarized beam of light which emerges from the rotating analyzer, after leaving the sample system (SS), (without any focusing being applied), is converted to an elliptically polarized beam of light, (ideally a circularly polarized beam of light), prior to entry to said detector. This is because most detectors are less prone to introduce polarization dependent sensitivity errors into polarized light beam intensity measurements when an entering polarized beam of light is elliptically, (preferably circularly), polarized than when it is linearly polarized.

Embodiments of the invention utilise one or more variable retarders as shown as VR1 and VR2 in Fig. 2, but for a very different purpose and in a very different manner than as discussed above with respect to retarder R1.

A variable retarder can be applied in a system such that the amount of retardation provided is continuously variable. That is, a variable retarder can be oriented in a system so as to have virtually no effect on a polarized beam of light passing therethrough, except perhaps for a minor linear attenuation effect on the intensity thereof. Alternatively, it can be oriented in a system to effectively convert linear polarization to circular polarization, that is, to provide ninety (90) degrees of retardation to the "P" relative to the "S" component in a polarized beam of light and vice versa. A variable retarder can also provide other amounts of retardation, which are greater or lesser than ninety (90) degrees.

When a Berek-type variable retarder is placed in an ellipsometer system and positioned such that a polarized beam of light has an angle of incidence (AOI) of zero (0.0) degrees to the optical axis, which optical axis is, ideally, perpendicular to the surfaces of said Berek-type variable retarder, the polarization state of the polarized beam of light is not effected by the presence of said Berek-type retarder. However, if the Berek-type variable retarder is "tilted" so that the beam of polarized light has an angle of incidence (AOI) other than zero (0.0) degrees to the optical axis thereof, the polarization state, (ie. the angular relationship of the "P" and "S" components with respect to one another), of said polarized beam of light can be greatly effected. Greater angles of "tilt" will effect an impinging polarized beam of light with effectively greater retardation.

A Berek-type variable retarder can also provide continuously variable amounts of retardation in excess of the range of zero (0.0) to ninety (90) degrees, over a large range of wavelengths. That is, unlike individual zero and multiple-order-waveplates with optical axes in a plane parallel to a surface thereof, Berek-type retarders are not designed for use at but a single wavelength, (or at best a small (eg. perhaps one-hundred (100) nanometers), band of wavelengths around an average design-wavelength). This makes Berek-type retarders especially attractive in the context of the present invention. It is also noted that while capable of operating over a large wavelength range, a Berek-type variable retarder has only two surface-interfaces which can serve to internally reflect an impinging polarized beam of light. As a result, minimal artifacts are added to a polarized beam of light by passage therethrough. Because of this, typically available Berek-type variable retarders are utilised in methods of the invention.

It is well known practice to determine ellipsometric ALPHA and ellipsometric BETA as defined in EQ. 1. Ellipsometric ALPHA and ellipsometric BETA are generally, but not necessarily, found by a "Fourier Analysis" approach as applied to an appropriate data set obtained at a detector system (DET). Some procedures then apply mathematical corrections to the so-determined ellipsometric ALPHA and ellipsometric BETA parameters to provide ellipsometric ALPHA PRIME and ellipsometric BETA PRIME parameters in an attempt to minimize the effects of polarization dependence sensitivity, electrical signal gain in amplifiers and the like. Other mathematical manipulations can also be performed, such as signal compensating for wavelength dependent attenuation etc.

However, whether mathematical manipulation of the measured ellipsometric ALPHA and ellipsometric BETA is done or not, the purpose of determining the ellipsometric ALPHA and ellipsometric BETA parameters in rotating element ellipsometers (REE's) is generally to allow the mathematical calculation of well known sample system (SS) characterizing ellipsometer PSI and DELTA constant parameters by means of, for instance, transfer functions. Said PSI and DELTA constant parameter values being representative of an investigated sample system (SS) optical properties, (e.g. such as refractive index, extinction coefficient and even temperature), and for instance, of the thickness and composition of a thin film(s) present on the surface of a sample system. The conversion of measured ellipsometric ALPHA and ellipsometric BETA parameters to calculated PSI and DELTA values can be by means of well known transform equations. See Eqs. 2 and 3 for the general form of equations which apply to rotating analyzer ellipsometer (RAE) systems, in the case wherein an isotropic sample system is being investigated:

$$TAN(PSI) = \frac{\sqrt{1 + ALPHA}\ ABS(TAN(POL))}{\sqrt{1 - ALPHA}} \qquad EQ.\ 2$$

$$PSI = ARCTAN\left(\frac{\sqrt{1 + ALPHA}\ ABS(TAN(POL))}{\sqrt{1 - ALPHA}}\right)$$

$$COS(DELTA) = \frac{BETA}{\sqrt{1 - ALPHA^2}} \qquad EQ.\ 3$$

$$DELTA = ARCCOS\left(\frac{BETA}{\sqrt{1 - ALPHA^2}}\right)$$

where (POL) is an angle set by a polarization state generator, which is easily controlled by a user. As the angle (POL) is changed, it will be observed from Eq. 2 that the measured value of ellipsometric ALPHA involved in arriving at a sample system constant PSI value will change. For other (REE's) similar equations exist. For example in (RPE) systems, the angle (POL) in Eqs. 2 and 3 is replaced by an angle (ANL), the azimuthal angle of an analyzer, with similar modification being made in Equation 1. It is noted that modified equations apply where anisotropic or anisotropic-depolarizing sample systems are investigated, but similar benefits to those exemplified by EQS. 2 and 3, which are valid for the case where an isotropic sample system is investigated, result from embodiments where anisotropic or anisotropic-depolarizing sample systems are investigated.

Observation of Eq. 2 shows that an ellipsometric ALPHA value of approximately one (1.0) will cause the equation denominator to go to zero (0.0), and the value provided by said equation for any set polarization state generator polarizer, polarizer (P) set angle (POL), to be infinity. Such a result defeats the goal of ellipsometric analysis. If, however, ellipsometric ALPHA is approximately zero (0.0) then Eq. 2 will be sensitive to changes in the polarization state generator (PSG), polarizer (P) set angle (POL), and not ellipsometric ALPHA. This is a desirable situation as noise and errors in measurement etc. of ellipsometric ALPHA value are eliminated while the polarization state generator (PSG), polarizer (P) set angle (POL) remains controllable by a user. Now, it is known that different settings of the polarization state generator (PSG), polarizer (P) set angle (POL), are associated with different values of ellipsometric ALPHA. That is, a user controlling the polarization state generator (PSG), polarizer (P) set angle (POL) can effect a desired detector system (DET) measured value of ellipsometric ALPHA. As indicated, ideally one would want ellipsometric ALPHA to be zero (0.0), however, it will be noted that any ellipsometric ALPHA value below about nine-tenths (0.9) will serve to greatly reduce the effect of noise and errors in measurement etc. in ellipsometric ALPHA, in the calculation of PSI via Eq. 2. That is, while preferable, it is not absolutely required that the value of ellipsometric ALPHA be zero (0.0) to sufficiently decrease the sensitivity of Eq. 2 to changes in ellipsometric ALPHA such as can occur because of noise, or because of errors in measurement or determining ellipsometric ALPHA by evaluating to EQ. 1 in view of a measured detector provided data set, for instance. (That is, data can be obtained which can be utilized in calculating PSI and DELTA values when ellipsometric ALPHA is not zero (0.0), even though that is an optimum value for ellipsometric ALPHA).

As was alluded to infra, it is well known, in (RAE) systems, to adjust the polarization state generator angle (POL) to set a desired ellipsometric ALPHA value in practice. What has not been possible previously is the ability to conveniently, (and simultaneously), provide control of ellipsometric BETA values, over a relatively large range of wavelengths, (e.g. one-hundred-ninety (190) to seventeen-hundred (1700) nanometers), for a similar reason as described with respect to ellipsometric ALPHA. Inspection of Eq. 3 shows that calculation of DELTA, (again a sample system (SS) characterizing parameter which is constant for a given (AOI) and wavelength), requires knowing a measured parameter ellipsometric BETA. It occurs, in certain ranges of ellipsometric BETA parameter values, that ellipsometric BETA is very sensitive to unavoidable noise and measurement errors etc. introduced in conducting an investigation of a sample system (SS). Hence, just as is the case with ellipsometric ALPHA, it would be desirable to be able to control the value of ellipsometric BETA so that it is in a range where the effect of noise and errors in measurement etc. ellipsometric BETA, in the Eq. 3 transfer function which provides DELTA, are negligible. As with ellipsometric ALPHA, a value of zero (0.0) is ideal, but not absolutely required.

There is a need for a method that will allow a user to adjust an ellipsometer system during use, such that both measured ellipsometric ALPHA and ellipsometric BETA parameter values can be simultaneously set to values in ranges wherein noise and errors in measurement thereof have negligible effect on the calculation of PSI and DELTA by transfer function Eqs. 2 and 3. As noted, numerous pairs of ellipsometric ALPHA-ellipsometric BETA values can satisfy EQ. 1. Some values of ellipsometric ALPHA, (i.e. near zero (0.0) or at least less than nine-tenths (0.9)), however, will be found to decrease the sensitivity of Eq. 2 to noise and measurement errors in ellipsometric ALPHA as compared to that present when greater values of ellipsometric ALPHA are utilized. As well, some relatively low values of ellipsometric BETA will decrease the sensitivity of Eq. 3 to noise and measurement errors in ellipsometric BETA. If a user could then adjust an ellipsometer system so that Eqs. 2 and 3 are provided ellipsometric ALPHA and ellipsometric BETA values nearer zero (0.0) than to one (1.0), said ellipsometric ALPHA and ellipsometric BETA values being arrived at by, for instance Fourier Analysis, in view of a set of data obtained experimentally from said detector system (DET), then said ellipsometer system provided data would be made insensitive to noise and errors in measurement etc. in arriving at ellipsometric ALPHA and ellipsometric BETA values, as said noise and errors in measurement effect calculation of PSI and DELTA values from Eqs. 2 and 3. Embodiments described herein allow control over the measured ellipsometric BETA value, in addition to the measured value of ellipsometric ALPHA.

Fig. 2 shows the system of Fig. 1 with added variable tilt retarders (VR1) and (VR2). As described above, the retarder (R1) of Fig. 1 can be positioned after the rotating analyzer (RA) and ahead of the detector system (DET) and serves in use to reduce the effect of polarization dependence sensitivity of a detector system (DET). However, variable retarders (VR1) and (VR2) are placed ahead of the rotating analyzer (RA). In use both said variable retarders (VR1) and (VR2) can be present, or only one might be provided. The point is that the presence of a variable retarder at the location of (VR1) and/or (VR2) allows a user an adjustment by which the measured ellipsometric BETA parameter value can be set. It will be appreciated that once the polarized beam of light passes through the sequentially following rotating analyzer (RA), it will again be linearly polarized. The variable retarder(s) can be present in addition to other variable retarders which are present specifically to allow determination of Mueller Matrix components.

Continuing, reference to Eq. 4 shows the effect of (VR1) and/or (VR2).

$$COS(DELTA + R) = \frac{BETA}{\sqrt{1 - ALPHA^2}} \qquad Eq. \ 4$$

$$DELTA = ARCCOS\left(\frac{BETA}{\sqrt{1 - ALPHA^2}}\right) - R$$

where the "subtracted-out" "R" value is the amount of retardation provided by (VR1) and/or (VR2) which contributed to the value of BETA which was measured. (Note, EQ 4 is technically valid only where the fast axis of the variable retarder is in the "P" or "S" plane, however, said equation generally demonstrates the effect utilized by the invention).

Comparison to Eq. 3 shows that the argument of the COS term has been modified by the addition of the retardation effected by the presence of (VR1) and/or (VR2). Alternatively, it can be stated that an "offset" is added to the equation for calculating DELTA by the "tilt" of (VR1) and/or (VR2), thereby effecting a change of the value of the measured ellipsometric BETA parameter. Again, said measured value can be set to be, ideally, near zero (0.0), although any reduction in a measured value thereof is beneficial.

In use a routine which allows measuring an ellipsometric ALPHA and ellipsometric BETA pair solution to EQ. 1, typically as arrived at by Fourier Analysis of a data set provided experimentally at the detector system (DET), will be followed. Said routine provides an ellipsometric ALPHA value in a range which is not significantly sensitive to noise and errors in measurement etc. involved in arriving thereat, so that in application of Eqs. 2, which it will be recalled allows calculation of PSI from a measured ellipsometric ALPHA value, the effect of noise and errors in measurement of ellipsometric ALPHA are negligible. As well, the routine allows setting a measured ellipsometric BETA value in a range in which it is not significantly sensitive to noise and errors in measurement thereof.

Now, it will be appreciated that retarders (VR1) & (VR2) can each physically constitute a plate of a finite thickness, presenting with offset parallel surfaces. (Of course, no retarder is physically perfect). Such a plate can be "tilted" in many ways. Two preferred axes of rotation are demonstrated in Figs. 3a and 3b. Fig. 3a shows azimuthal tilt around a vertical axis and Fig. 3b shows elevational tipping around a horizontal axis. Both clockwise and counterclockwise rotations can be effected in both the azimuthal and elevational cases. Such multidirectional tilt adjustment capability allows the effect of imperfections, which vary from retarder to retarder, to be adjusted out. For example, one imperfection which occurs is that the optical axis of a retarder is oriented other than exactly perpendicular or parallel to the surface of the retarder. The ability to effect multidirectional "tilting" of such a retarder allows matching the (AOI) of an impinging beam of light "exactly" as desired with respect to the actual direction of the polarization axis of a retarder.

The Berek-type retarder may be made of a magnesium fluoride plate and have a bandwidth in operation in excess of one-hundred-ninety (190) to seventeen-hundred (1700) nanometers. Such a Berek-type retarder may provide an effective retardance, variable over a range of from zero (0.0) to in excess of plus or minus ninety (90) degrees, over said entire range of frequencies for one-hundred-ninety (190) to seventeen-hundred (1700) nanometers.

Saphire might also be a usable material from which a Berek-type retarder can be made. Mica may also be used, although it becomes opaque in certain wavelength regions of interest. Quartz, even though it is optically active in that it rotates a polarized beam of light, is also a possible material for a Berek-type retarder.

Fig. 4a shows a beam of light incident upon a Berek-type retarder plate at an angle of incidence (AOI) of zero (0.0) degrees thereto, (that is, the angle between the normal to the surface of the retarder plate and the impinging beam of light is zero (0.0) degrees). In an ideal Berek-type retarder the optical axis is perpendicular to the plane of the surface (s) of the retarder plate, and the polarization state of a polarized beam of light which is aligned with the optical axis so as to impinge at said ninety (90) degree angle to said surface(s), is not significantly affected as it passes therethrough. In practice, the optical axis of a Berek-type retarder can be slightly off perpendicular to the surface thereof, and the surfaces thereof may not be exactly parallel to one another. A multiaxis tilting procedure can be utilized to effect coincidence between the direction of the polarized beam of light and the actual effective optical axis. Said multiaxis tilting procedure will generally be found to be require different amounts of tilt for each specific Berek-type retarder because of manufacturing variance from one unit to another.

The presence of a variable retarder (VR1) and/or (VR2) as shown in Fig. 2 allows determination of the direction of rotation, (the "handedness") of a polarized beam of light. Introduction of a retardation "R" will effect the polarization state by adding to, or subtracting from an existing polarization state, depending on the "handedness" thereof. By detecting the direction of the effect of adding retardance "R", the "handedness" of the polarized beam of light acted upon can be established.

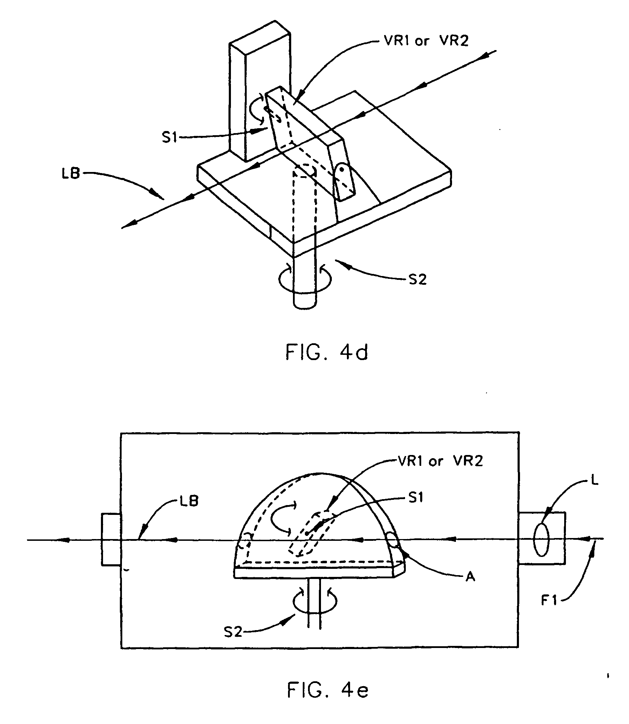

Figures 3a and 3b show two axes of "tilt" of a Berek-type variable retarder (VR). Figures 4d and 4e show rotation of the Berek-type variable retarder (VR) around mutually perpendicular shafts (S1) and (S2). Shown also is a light beam (LB) passing through said Berek-type variable retarder (VR), Figs. 4d and 4e. Fig. 4e provides another view of two axes of "tilt" Berek-type variable retarder (VR) with a light beam (LB) passing therethrough. Fig. 4e also shows a fiber (F1) carrying the light beam (LB) to focusing lens (L). The light beam (LB) is shown passing through a Berek-type variable retarder (VR) via an aperture (A) in a housing therefor.

A Case 1 no-plate mode refers to a scenario in which neither variable retarder (VR1) or (VR2) is present, and in which the polarizer (P) is adjusted to set ellipsometric ALPHA in an insensitive range and a resulting ellipsometric ALPHA-ellipsometric BETA pair is directly provided from the detector system (DET) data, typically by a Fourier Analysis procedure applied to modulated intensity data in (REE's).

A Case 2 no-plate regression mode refers to a scenario in which neither variable retarder (VR1) or (VR2) is present, and in which a number of polarizer (P) settings are effected and a data set comprised of a number of ellipsometric ALPHA-ellipsometric BETA pairs, provided by analysis of data provided by the detector system (DET), are mathematically subjected to a regression procedure to determine "most likely" PSI and DELTA values in view thereof. This approach to PSI and DELTA evaluation does not impose any control on the value of ellipsometric BETA.

A Case 3, plate-zero-mode is identified wherein an ideal Berek-type variable retarder (VR1) and/or (VR2) is/are present, as shown in Fig. 2. Said Berek-type variable retarder(s) has/have the optical axis thereof oriented perpendicular to the surface thereof. If the beam of light is incident along the optical axis of said Berek-type variable retarder plate, as shown in Fig. 4a, then except for minor attenuation, the variable retarder plate has no effect. Thus an ellipsometer system can include such a Berek-type variable retarder plate which need not be physically removed when not used in certain instances. Simple alignment will make its presence undetectable, thereby making use of the ellipsometer system much more convenient.

Two cases, in addition to the above mentioned Case 3 plate-zero-mode, apply to an ellipsometer system in which variable retarder(s) (VR1) and/or (VR2) are present.

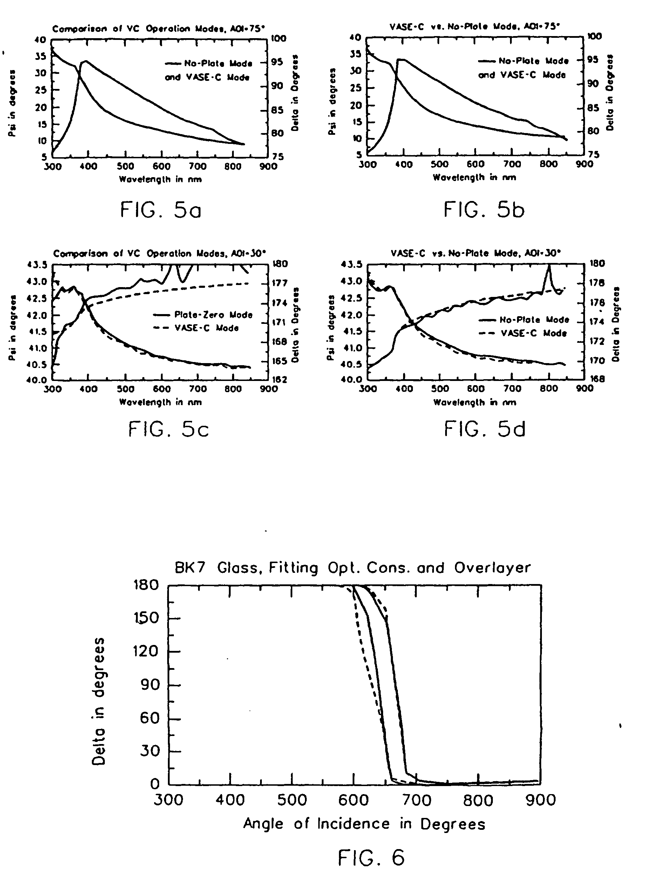

Figs. 5 to 7 show results obtained using Case 4, VASE-C mode. In the specific tests demonstrated in these Figures, two (2) (RAE) polarizer angle (POL) positions were used, and five (5) variable retarder positions were used at each thereof, leading to a collection of ten (10) data ellipsometric ALPHA-ellipsometric BETA pair values. The five variable retarder positions correspond to zero (0.0) tilt, a clockwise and a counter-clockwise azimuthal tilt and a clockwise and a counter-clockwise elevational tilt. Forty-five (45) degree tilts were utilized to acquire the data which was used to calculate the PSI and DELTA values plotted in Figs. 5 - 7. A mathematical regression was applied to said ten (10) ellipsometric ALPHA-ellipsometric BETA pair data to find constant PSI and DELTA parameters which provide the best fit by a minimized square error approach. Such regression procedures are well known to those knowledgeable in the art.

In this case some of the ten (10) ellipsometric ALPHA-ellipsometric BETA pairs will not have ellipsometric ALPHA and/or ellipsometric BETA values which are in ranges which are insensitive to noise and errors in measurement;

but application of the mathematical regression approach to evaluating PSI and DELTA in view of the plurality of ellipsometric ALPHA-ellipsometric BETA pair data, provides a result which is surprisingly good. The regression technique reduces the importance of less than optimum ellipsometric ALPHA-BETA pairs for two reasons. First, the less optimum ellipsometric ALPHA-BETA pairs tend to have large uncertianties, (are noisier), and the regression is made to weight the ellipsometric ALPHA-BETA pair inversely with respect to noise. Second, the "effective transfer function" associated with the regression automatically applies information contained in the fitting model which limits the influence of less optimum ellipsometric ALPHA-BETA pairs.

The use of ten (10) ellipsometric ALPHA-ellipsometric BETA pairs was arbitrary and other numbers of ellipsometric ALPHA-ellipsometric BETA pairs could be used by changing the number of (AOI's) and number of retarder "tilt" positions so as to arrive at other than ten ellipsometric ALPHA-ellipsometric BETA parameter values for use in the regression evaluation of PSI and DELTA. The only difference between Case 2 and Case 4 is that in Case 4, a ellipsometric BETA affecting retarder plate present in the ellipsometer system and is utilized as a means to control measured ellipsometric BETA values while collecting ellipsometric ALPHA-ellipsometric BETA pair data. Case 2 also utilizes a mathematical regression approach to arriving at PSI and DELTA.

A Case 5 plate-mode refers to a scenario in which ellipsometric ALPHA is set to a value in a range where it is insensitive to noise and measurement errors by adjustment of the polarizer, and ellipsometric BETA is set to a value in a range where it is similarly insensitive by adjustment of variable retarder(s) (VR1) and/or (VR2). Then as in Case 1, Fourier Analysis, (or some similar technique), is applied to data acquired from the detector system (DET) to evaluate an ellipsometric ALPHA and an ellipsometric BETA. The only difference between Case 1 and Case 5 is that in Case 5 an ellipsometric BETA affecting retarder plate is present in the ellipsometer system and utilized to set ellipsometric BETA to an insensitive region value in use.

Figs. 5a and 5b demonstrate PSI and DELTA plots achieved from data acquired where an (AOI) of seventy-five (75) degrees was utilized. Fig. 5a shows a comparison between Case 3 plate-zero mode and Case 4 VASE-C data and Fig. 5b shows a comparison between Case 1 no-plate mode and VASE-C mode. Note that at a seventy-five (75) degree (AOI) all modes provide good PSI and DELTA data. Figs. 5c and 5d show plots achieved from data acquired similarly to how data was acquired for the plots in Figs. 5a and 5b respectively, but where an (AOI) of thirty (30) degrees. Note that only the Case 4 VASE-C mode provides good DELTA data.

Fig. 6 shows DELTA calculated from data achieved from data acquired by investigating thick BK7 glass using a Case 4 VASE-C mode where the (AOI) was varied from fifty (50) to sixty-two (62) degrees. Note that reliable DELTA values are achieved near zero (0.0) and one-hundred-eighty (180) degrees, where reliable values for DELTA are not ordinarily obtainable.

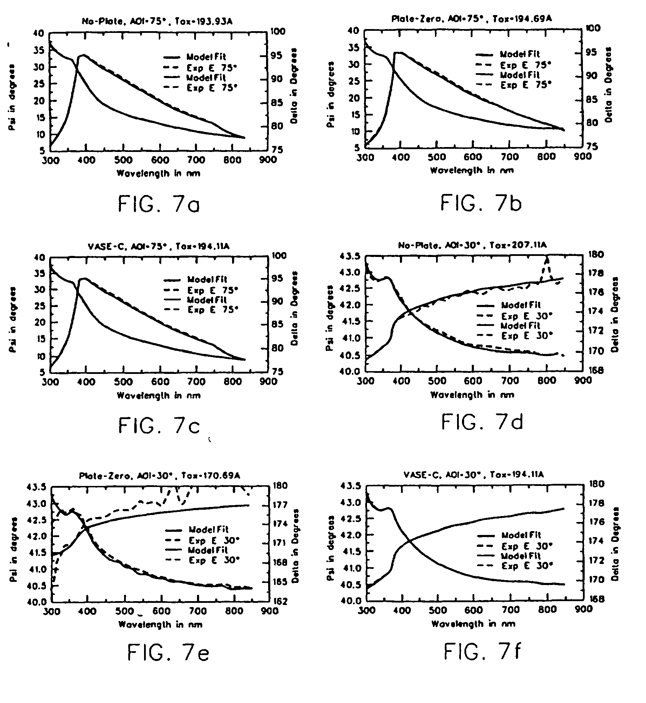

Figs. 7a - 7f show additional PSI and DELTA plots achieved from data acquired from various of the modes identified above. Figs. 7a - 7c are for data acquired using an (AOI) of seventy-five (75) degrees, and Figs. 7c - 7f are plots achieved from data acquired using an (AOI) of thirty (30) degrees. Fig. 7a is for a Case 1 no-plate mode, Fig. 7b is for a Case 3 plate-zero mode and Fig. 7c is for a Case 4 VASE-C mode. Note that the PSI and DELTA values shown in Figs. 7a - 7c are all good. Note however, that the DELTA values shown in Fig. 7f is superior to that shown in Figs. 7d and 7e. That is, where the (AOI) is set at thirty (30) degrees, only the Case 4 VASE-C approach to calculating DELTA provided a very good result over the full spectrum of wavelengths shown.

The most important results from the test results are:

1. Use of the Case 4 VC VASE-C mode in evaluating PSI and DELTA parameters allows greatly reduced restraints on the angle of incidence (AOI) of a sample system probing polarized beam of light, (said (AOI) being with reference to the surface of a sample system being investigated). That is, for instance, PSI and DELTA values for a semiconductor can be found by regression on data obtained with the (AOI) at seventy-five (75) degrees. The quality of data obtained with the (AOI) set to thirty (30) degrees, for instance, allows PSI and DELTA value determination equally as well when a Case 4 VASE-C mode approach is utilized. This means that the (AOI) need not be set to the Principal or Brewster Angle to obtain high quality data. Those knowledgeable in the field of ellipsometry will immediately recognize the surprising nature of this result. (Note that the PSI and DELTA values obtained at different (AOI's) are not the same values, but that the data obtained with the (AOI) set to thirty (30) degrees is of a quality associated with data taken at the Principal or Brewster Angle.) Where a semiconductor is the sample system, the (AOI) is typically set at the Brewster angle of approximately seventy-five (75) degrees, where DELTA is near ninety (90) degrees, and ellipsometric BETA becomes a minimum, (ideally zero (0.0)), to obtain data which allows reliable calculation DELTA values. That is, polarization state sensitivity to sample system optical and physical properties drops quickly when the (AOI) is varied from seventy-five (75) degrees. Methods of the invention, however, allows use of an (AOI) of thirty (30) degrees, (and other (AOI's)), with essentially no loss of said sensitivity. This is surprising and significant.

2. Use of the Case 4 VASE-C mode to measure DELTA values where the (AOI) is near the angle at which DELTA quickly changes from near one-hundred-eighty (180) degrees to zero (0.0) degrees. The case investigated involved a thick BK7 glass sample system. The critical (AOI) is between fifty-six (56) and fifty-eight (58) degrees. The very surprising result is that PSI and DELTA data in the obtained regions from fifty-five (55) to fifty-six (56) degrees and from fifty-seven (57) to fifty-eight (58) degrees is sufficiently accurate to allow calculation of thin film roughness, losses, thickness and optical refractive index therefrom. This is surprising as previously DELTA's associated with the identified (AOI) ranges were not measurable with sufficient accuracy using rotating element ellipsometers (REE's), (eg. (RAE), (RPE) etc.).

A rotating analyzer ellipsometer (RAE) was used as an example in the foregoing. Of course, the foregoing discussion is also applicable to rotating polarizer ellipsometer (RPE) systems where the functions of the analyzer, (which becomes a non-rotating element (A)), and polarizer, (which becomes a rotating polarizer (RP)), are simply reversed. That is, in a rotating polarizer ellipsometer (RPE) there is present a rotating polarizer (RP) and an analyzer (A), rotation of which aanalyzer (A) sets its azimuthal angle which is the ellipsometric ALPHA determining parameter, (identified as (ANL)), equivalent to (POL) in the foregoing. In a rotating analyzer ellipsometer then, a polarizer sets a polarization state and a rotating analyzer analyzes changes in such effected by interaction with a sample system. In a rotating polarizer ellipsometer, the rotating polarizer sets a continuous array of polarization states and a stationary analyzer interprets changes in such effected by interaction with a sample system.

As well, while the equations corresponding to Eqs. 1, 2, 3 and 4, herein, (which corresponding equations are not presented herein), are somewhat different in other than rotating analyzer and rotating polarizer ellipsometers, the foregoing discussion is generally applicable to any ellipsometer system which contains a rotating element, (such as a rotating compensator ellipsometer, and a rotating analyzer and polarizer and fixed compensator ellipsometer).

Methods as described herein may also be used with rotatable element nulling ellipsometer (RENE) systems, including automated versions (REANE). A typical rotatable element nulling ellipsometer (RENE) system can be visualized by reference to Fig. 2, with the rotating analyzer (RA) being interpreted as a "rotatable" analyzer. Use of a (RENE) system involves providing a beam of light from a light source (LS), causing it to become linearly polarized by passage through a polarizer (P), (which is also "rotatable"), and then through a compensator, (positioned as is (VR1) in Fig. 2, but typically being a fixed wavelength rotatable azimuth retarder), prior to interacting with a sample system (SS). Light reflecting from said sample system (SS) passes through said "rotatable" analyzer (RA) and enters a detector (DET) system. In use the azimuths of said "rotatable" polarizer (P), fixed wavelength rotatable azimuth retarder, (positioned as is (VR1) in Fig. 2), and rotatable analyzer (RA) are set so that the detector reads a minimum value. A number of said "null" readings can be obtained at a number of polarizer settings, (typically at (+/- forty-five degrees with respect to one another), and a transfer function utilized to arrive as a sample system PSI and DELTA. A purpose of the compensator is to enter a retardance to one quadrature component of a polarized beam of light passing therethrough with respect to the other thereof. Heretofore, accurate direct control of a variable amount of quadrature component retardance, over a relatively large spectroscopic range, was not possible because of resolution problems, and because of the requirement that (RENE) compensator elements be changed when a widely varying range of wavelength investigated was changed.

The use of BEREK-type variable retarder in embodiments of the invention overcomes the resolution difficulties associated with setting quadrature component phase angle differences. And, as described elsewhere, the Berek-type variable retarder can provide variable retardance over a wide range of wavelengths because its optical axis, being perpendicular to a surface thereof, is not manufactured for application over only a relatively small range of wavelengths. Simply "tilting" said Berek-type variable retarder, (rather than replacing it), in one or more planes, effectively configures it for operation at a desired wavelength over a relatively large range thereof, and said "tilting" also directly controls the amount of retardance provided thereby to quadrature-orthogonal components of a polarized beam of light, at a desired wavelength.

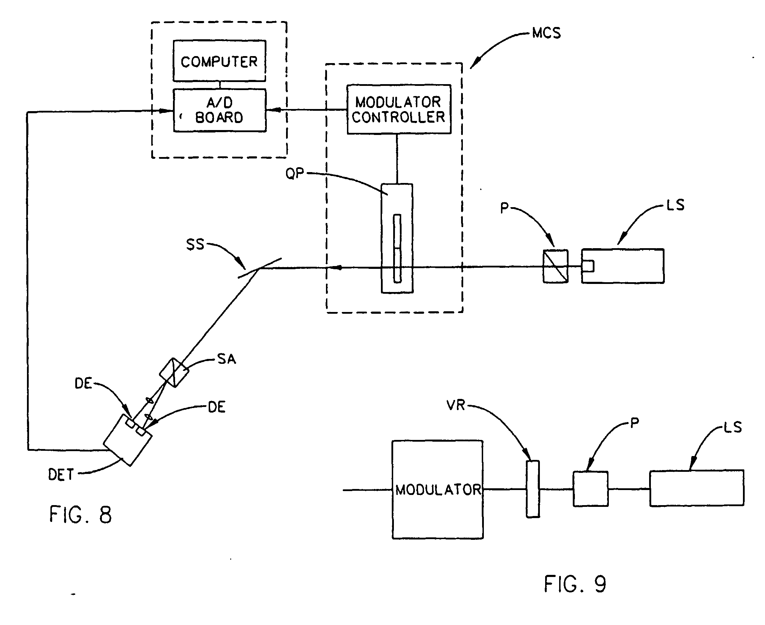

The foregoing discussion regarding application of variable retarders (VR's) to rotatable element nulling ellipsometer (RENE) systems and rotating element ellipsometer (REE) systems to optimize their operation, is also generally applicable to modulation element ellipsometers MEE's). Fig. 8 shows an example of a typical modulation element ellipsometer (MEE). A light source (LS) is followed by a polarizer (P). During use, a polarized beam of light emerging from the polarizer (P) enters a modulator controller system (MCS) which, via a quartz rod (QR), for instance, serves to polarization state modulate the polarized beam of light. Said modulated beam of polarized light then encounters and interacts with a sample system (SS), said interaction serving to affect the polarization state of said modulated polarization state modulated beam of light. A split analyzer (SA) then serves to direct quadrature components of said polarization state modulated polarized beam of light into a dual analyzer (DA) system. Signals from said dual analyzer (DA) are then subjected to separate Fourier Analysis procedures by way of, for example, an A/D board and computer system.

Fig. 9 shows a partial view of Fig. 8 with variable retarder (VR) added. The variable retarder (VR) can be entered at functionally equivalent locations in the Fig. 8 representation of a modulation ellipsometer and Fig. 9 is not to be interpreted as limiting.

Modulation ellipsometers have difficulty measuring PSI and DELTA for sample systems which provide PSI values near forty-five (45) degrees, and which, (as in RAE's for instance), provide DELTA values near zero (0) or one-hundred-eighty (180) degrees, (and additionally where DELTA is near ninety (90) degrees). While the range in which PSI measurement difficulties are encountered are somewhat different, as compared to rotating element ellipsometers, the underlying problem is equivalent. That being that ellipsometer systems in general are insensitive to and unable to accurately measure sample system PSI and DELTA values in certain ranges thereof.

Modulation ellipsometers operate by modulating quadrature components of an electromagnetic beam utilized in the investigation of a sample system, (which can be "P" and "S" components), which electromagnetic beam is caused to interact with a sample system during use. Utilization of one type of modulation ellipsometer requires that quadrature components be separately subjected to Fourier analysis to provide Fourier series coefficients therefore, as shown by Equations 5.

$$
\begin{aligned}
VA &= VA0 + VA1*COS(WT) + VA2*COS(2*WT) + VA3*COS(3*WT)) \\
&\quad\quad + VA4*COS(4*WT) + \dots \\[12pt]
&\quad\quad\quad\quad\quad\quad\quad\quad\quad\quad\quad\quad\quad\quad\quad\quad \text{EQNS. 5} \\[12pt]
VB &= VB0 + VB1*COS(WT) + VB2*COS(2*WT) + VB3*COS(3*WT)) \\
&\quad\quad VB4*COS(4*WT) + \dots
\end{aligned}
$$

Now, certain of the Fourier series coefficients from each quadrature component representing Fourier series are, it is to be realized, found to become insensitively small, and even vanish, where a measure sample system PSI is near forty-five (45) degrees and certain of said Fourier series coefficients are found to become insensitively small, and even vanish, where a measured sample system DELTA is near zero (0) or ninety (90), or one-hundred-eighty (180) degrees. The Fourier series coefficients which become insensitively small, or even vanish, where PSI is near forty-five (45) degrees or where DELTA is near zero (0), ninety (90), or one-hundred-eighty (180) degrees are utilized in equations which determine a sample system PSI and/or DELTA. The maths involved, however, is convoluted. That is, direct easily understood beam polarization state effect dependent describing equations, such as rotating analyzer ellipsometer, (RAE), representing equations 3 and 4, are not readily available. However, modulation ellipsometer systems, (e.g. as demonstrated in Fig. 8), are amenable to a Jones Matrix analysis, from which relations between Fourier coefficients of EQS. 6 can be uniquely related to a sample PSI and DELTA. For instance, equations 6 show functional dependence of various of the equations 5, see infra, modulation ellipsometer quadrature component Fourier series coefficients for one type of modulation ellipsometer;

$$
\begin{aligned}
VA1 &= 4*CA*(TAN(PSI))*(SIN(DELTA))*J1(M'); \\
VA2 &= 4*CA*(TAN(PSI))*(COS(DELTA))*J2(M'); \quad\quad \text{EQNS. 6} \\
VB1 &= -4*CB*(TAN(PSI))*(SIN(DELTA))*J1(M'); \\
VB2 &= 4*CB*(-TAN(PSI))*(COS(DELTA))*J2(M');
\end{aligned}
$$

where CA and CB are calculated from equations such as Equations 7,

$$
\begin{aligned}
CA &= ((4*VA2 + VA1*M +(VA0 - VA2)*M^2)/(2*M^2)) \quad \text{EQNS. 7} \\
CB &= ((4*VB2 + VB2*M +(VB0 - VB2)*M^2)/(2*M^2))
\end{aligned}
$$

and where J1 (M') and J2(M') are bessel functions of the first and second kind, respectively, evaluated at (M'), where (M') is arrived at by solution of a trancendental equation such as equations 8;

$$
\begin{aligned}
VA1*J3(M') &= -VA3*J1(M'); \quad\quad \text{EQNS. 8} \\
VB1*J3(M') &= -VB3*J1(M');
\end{aligned}
$$

where J3(M') is a Bessel Function of the Third kind evaluated at M'.

Now, Equations for calculating PSI and DELTA values, which Equations utilize above Equations 5, 6, 7 and 8, or simitar Equations, are represented by Equations 9;

$$
\begin{aligned}
&\text{SIN(DELTA)} = 2(((\text{COS(DELTA)})*VA1*VB1*J2(M')); \\
&\qquad\qquad\qquad ((VA1*VB2 + VA2*VB1)*J1(M')) \\[4pt]
&(\text{TAN(PSI)})^2 - U*(\text{TAN(PSI)}) + 1 = 0; \\[4pt]
&\text{where}\ \ U = (2*A*(B*C+2*D))*J2(M'))/(VA1*VB2 + VA2*VB1); \\[4pt]
&\text{and where A, B, C, AND D are;} \\[4pt]
&\qquad A = (\text{COS(DELTA)} \\
&\qquad B = (JO(M') +1) \\
&\qquad C = (VA2*VB1 - VA1*VB2) \\
&\qquad D = (VAO*VB1 - VA1*VBO)*J2(M')
\end{aligned}
\qquad \text{EQNS. 9}
$$

Inspection of the above equations 6 immediately reveals that at DELTA values of zero (0) or one-hundred-eighty (180) degrees, Fourier series quadrature component coefficients VA1 and VB1 become zero (0) because of their SIN(DELTA) functional dependence. Note also the VA2 and VB2 Fourier series quadrature component coefficient dependence on the COS(DELTA) function leads to VA2 and VB2 becoming zero (0) at DELTA equal to ninety (90) degrees. Continuing, inspection of equations 9, show that said quadrature components coefficients are VA1, VB1, VA2 and VB2 are required to allow evaluation of PSI and DELTA. Hence, where a sample system presents with a DELTA value of near zero (0) or ninety (90) or one-hundred-eighty (180) degrees, it is to be expected that the modulation ellipsometer will encounter problems in providing accurate measurements. Equivalent, less obvious, analysis can be applied to show that where a sample system presents with PSI values in the range of forty-five (45) degrees, a similar problem exists.

With embodiments as described, the variable retarder (VR) can be thought of an comprising part of a "composite sample system", said composite sample system consisting of a sample system per se. to be investigated, in series with the variable retarder (VR). In use a PSI and DELTA of a resulting "composite sample system" can be measured. The measured PSI and DELTA values are in ranges which can be accurately measured by modulation ellipsometer, with the effects of a known (VR) adjustment, (such as a known "tilt" angle), being compensated (e.g. subtracted therefrom or otherwise), to provide PSI and DELTA values for an investigated sample system per se.

It is possible to provide simultaneous variable retardance, and adjustment of the modulation ellipsometer polarizer, (and/or analyzer), to effect optimum operation. As considered in the discussion with respect to (REE's), simultaneous adjustment of both polarizer, (and/or analyzer), and variable retarder (VR), allows setting an optimum state of electromagnetic beam polarization.

The above example provides for use of Fourier series coefficients obtained from two polarized light beam quadrature components. Some modulation ellipsometers (ME's), however, utilise Fourier series coefficients from only one such quadrature component.

PSI and DELTA values of an effective composite sample system utilising an investigative electromagnetic beam in a certain polarization state, are caused to be within ranges such that measurement thereof can be performed by the ellipsometer system, regardless of type, with actual sample system per se. PSI and DELTA values then being arrived at by compensating (e.g. subtracting out or otherwise), the effect of a known (VR) setting, on the measured PSI and DELTA values. In use, optimum (VR) settings effecting an "optimum electromagnetic beam polarization state", (or as alternatively stated an "optimum composite sample system"), can be established within an ellipsometer system of any type, such that measured PSI and DELTA values are placed in ranges which can be accurately measured, with sample system per se. values then being arrived at by mathematically compensating (e.g. subtracting out or otherwise), the known effect of the (VR), and perhaps the rotation of a polarizer or analyzer.

It must also be mentioned that in the foregoing, Fourier analysis has been cited as a typical approach to evaluation of, for instance, ellipsometric ALPHA and ellipsometric BETA Values in EQ. 1. It is to be understood that ellipsometric ALPHA and ellipsometric BETA are representations of a modulated intensity superimposed upon a constant Intensity signal provided by an ellipsometer detector system (DET). It is possible to arrive at representations of said modulated Intensity by other than Fourier analysis. For instance an approach which utilizes digitizing is known as "Hadamard" analysis. As well, least or mean square error curve fitting approaches can be utilized. Methods known as "simplex" and "Newton-Ralphson" are examples of such approaches.

**Claims**

1. A method of investigating the physical and optical properties of a sample system by monitoring changes effected in the polarisation state of a beam of light, the method comprising the steps of:

   providing a beam of light from a source of light (LS);
   imposing a desired state of polarisation upon said beam of light;
   orienting said beam of light so that it interacts with a sample system (SS) to effect change in the polarisation state of the beam of light;
   monitoring a polarisation state of the beam of light after it interacts with the sample system; and
   deriving from the state of polarisation of the light beam, information as to the physical and optical properties of the sample system;
   passing the light beam through a variable retarder which, with a sample system per se (SS), forms a composite sample system as seen during the monitoring step, and
   making modifications so that at least the DELTA of said composite sample system is placed within a range in which the PSI and DELTA of said composite sample can be investigated;
   the method being **characterised in that**
   the variable retarder is a Berek - type variable retarder, and **in that**
   the Berek - type variable retarder is adjusted such that composite sample system PSI and DELTA determining data is obtained, the PSI and DELTA of the sample system per se being arrived at via a procedure of indirect mathematical regression applied to multiple composite sample system PSI and DELTA determining data points, which procedure compensates for the presence of said at least one Berek-type variable retarder; wherein
   the Berek-type variable retarder is adjusted by orienting the retarder to take up variable retarder positions at each of which ellipsometric ALPHA-ellipsometric BETA pair values are collected, the mathematical regression being applied to the ALPHA-BETA data pairs to enable the evaluation of PSI and DELTA.

2. A method as claimed in Claim 1, using an ellipsometer, wherein the step of imposing a desired state of polarisation upon said beam of light is accomplished by passing said light beam through a polariser (P); and where the step of monitoring a polarisation state of the beam of light after it interacts with the sample system (SS) is accomplished by passing said light beam through an analyser and into a detector (DET); wherein said ellipsometer comprises said source of light (LS), the polariser (P), the analyser (A) and the detector (DET), and wherein either the polariser or the analyser is a rotating element.

3. A method as claimed in Claim 1, using a modulation ellipsometer, wherein the step of imposing a desired state of polarisation upon said beam of light is accomplished by passing said light beam through a polariser (P), and then through a modulation element (ME); and wherein the step of monitoring a polarisation state of the beam of light after it interacts with the sample system (SS) is accomplished by passing said light beam through an analyser (SA) and into a detector (DET).

**Patentansprüche**

1. Verfahren zum Überprüfen der physikalischen und optischen Eigenschaften eines Probennahmesystems durch Überwachen von Änderungen, die im Polarisationszustand eines Lichtstrahlenbündels auftreten, wobei das Verfahren die folgenden Schritte umfasst:

   Vorsehen eines Lichtstrahlenbündels von einer Lichtquelle (LS);
   Beaufschlagen des Lichtstrahlenbündels mit einem gewünschten Polarisationszustand;
   Orientieren des Lichtstrahlenbündels in der Weise, dass es mit einem Probennahmesystem (SS) in Wechselwirkung tritt, um eine Änderung des Polarisationszustands des Lichtstrahlenbündels zu bewirken;
   Überwachen eines Polarisationszustands des Lichtstrahlenbündels, nachdem es mit dem Probennahmesystem in Wechselwirkung getreten ist; und
   Ableiten von Informationen bezüglich der physikalischen und optischen Eigenschaften des Probennahmesystems aus dem Polarisationszustand des Lichtstrahlenbündels;

Schicken des Lichtstrahlenbündels durch eine variable Verzögerungseinrichtung, die mit einem eigentlichen Probennahmesystem (SS) ein zusammengesetztes Probennahmesystem, wie es während des Überwachungsschrittes gesehen wird, bildet, und

Vornehmen von Modifikationen, so dass wenigstens das DELTA des zusammengesetzten Probennahmesystems in einem Bereich liegt, in dem das PSI und das DELTA der zusammengesetzten Probe überprüft werden können;

wobei das Verfahren **dadurch gekennzeichnet ist, dass**

die variable Verzögerungseinrichtung eine variable Verzögerungseinrichtung des Berek-Typs ist und dass

die variable Verzögerungseinrichtung des Berek-Typs in der Weise eingestellt wird, dass PSI- und DELTA-Bestimmungsdaten des zusammengesetzten Probennahmesystems erhalten werden, wobei das PSI und das DELTA des eigentlichen Probennahmesystems über eine Prozedur einer indirekten mathematischen Regression erreicht werden, die auf mehrere PSI- und DELTA-Bestimmungsdatenpunkte des zusammengesetzten Probennahmesystems angewendet wird, wobei die Prozedur das Vorhandensein der wenigstens einen variablen Verzögerungseinrichtung des Berek-Typs kompensiert;

wobei

die variable Verzögerungseinrichtung des Berek-Typs durch Orientieren der Verzögerungseinrichtung in der Weise, dass variable Verzögerungseinrichtungspositionen eingenommen werden, wovon an jeder Werte für das Paar aus ellipsometrischem ALPHA und aus ellipsometrischem BETA gesammelt werden, eingestellt wird, wobei die mathematische Regression auf die ALPHA-BETA-Datenpaare angewendet wird, um die Auswertung von PSI und DELTA zu ermöglichen.

**2.** Verfahren nach Anspruch 1, das ein Ellipsometer verwendet, wobei der Schritt des Beaufschlagens des Lichtstrahlenbündels mit dem gewünschten Polarisationszustand durch Schicken des Lichtstrahlenbündels durch einen Polarisator (P) erzielt wird; und wobei der Schritt des Überwachens eines Polarisationszustands des Lichtstrahlenbündels, nachdem es mit dem Probennahmesystem (SS) in Wechselwirkung getreten ist, durch Schicken des Lichtstrahlenbündels durch einen Analysator und in einen Detektor (DET) erzielt wird; wobei das Ellipsometer die Lichtquelle (LS), den Polarisator (P), den Analysator (A) und den Detektor (DET) umfasst und wobei entweder der Polarisator oder der Analysator ein rotierendes Element ist.

**3.** Verfahren nach Anspruch 1, das ein Modulationsellipsometer verwendet, wobei der Schritt des Beaufschlagens des Lichtstrahlenbündels mit einem gewünschten Polarisationszustand durch Schicken des Lichtstrahlenbündels durch einen Polarisator (P) und dann durch ein Modulationselement (ME) erzielt wird; und wobei der Schritt des Überwachens eines Polarisationszustands des Lichtstrahlenbündels, nachdem es mit dem Probennahmesystem (SS) in Wechselwirkung getreten ist, durch Schicken des Lichtstrahlenbündels durch einen Analysator (SA) und in einen Detektor (DET) erzielt wird.

**Revendications**

**1.** Procédé pour étudier les propriétés physiques et optiques d'un système d'échantillon en surveillant les changements causés à l'état de polarisation d'un faisceau de lumière, le procédé comprenant les étapes consistant à :

fournir un faisceau de lumière provenant d'une source de lumière (LS) ;
imposer un état de polarisation souhaité audit faisceau de lumière ;
orienter ledit faisceau de lumière pour qu'il interagisse avec un système d'échantillon (SS) afin de provoquer un changement de l'état de polarisation du faisceau de lumière ;
surveiller un état de polarisation du faisceau de lumière après son interaction avec le système d'échantillon ; et
dériver à partir de l'état de polarisation du faisceau de lumière des informations concernant les propriétés physiques et optiques du système d'échantillon ;
passer le faisceau de lumière à travers un retardateur variable qui, avec un système d'échantillon en soi (SS), forme un système d'échantillon composite tel qu'observé lors de l'étape de surveillance, et
pratiquer des modifications pour qu'au moins le DELTA dudit système d'échantillon composite soit placé dans une plage dans laquelle le PSI et le DELTA dudit échantillon composite puissent être étudiés ;
le procédé étant **caractérisé en ce que**
le retardateur variable est un retardateur variable de type Berek, et **en ce que**
le retardateur variable de type Berek est ajusté pour que des données déterminant le PSI et le DELTA du système d'échantillon composite soient déterminés, le PSI et le DELTA du système d'échantillon en soi étant obtenus par l'intermédiaire d'une procédure de régression mathématique indirecte appliquée aux multiples point de données déterminant le PSI et le DELTA du système d'échantillon composite, ladite procédure compensant la présence dudit au moins un retardateur variable de type Berek ; dans lequel le retardateur variable de type Berek est ajusté en orientant le retardateur pour prendre des positions de retardateur variable à chacune desquelles des valeurs de paire ALPHA ellipsométrique-BETA ellipsométrique sont collectées, la régression mathématique étant appliquée aux paires de données ALPHA-BETA pour permettre l'évaluation du PSI et du DELTA.

2. Procédé selon la revendication 1, utilisant un ellipsomètre, dans lequel l'étape consistant à imposer un état de polarisation souhaité audit faisceau de lumière est accomplie par le passage dudit faisceau de lumière à travers un polarisateur (P) ; et dans lequel l'étape consistant à surveiller un état de polarisation du faisceau de lumière après son interaction avec le système d'échantillon (SS) est accomplie par le passage dudit faisceau de lumière à travers un analyseur et dans un détecteur (DET) ; dans lequel ledit ellipsomètre comprend ladite source de lumière (LS), le polarisateur (P), l'analyseur (A) et le détecteur (DET), et dans lequel soit le polarisateur soit l'analyseur est un élément rotatif.

3. Procédé selon la revendication 1, utilisant un ellipsomètre à modulation, dans lequel l'étape consistant à imposer un état de polarisation souhaité audit faisceau de lumière est accomplie par le passage dudit faisceau de lumière à travers un polarisateur (P) puis à travers un élément de modulation (ME) ; et dans lequel l'étape consistant à surveiller un état de polarisation du faisceau de lumière après son interaction avec le système d'échantillon (SS) est accomplie par le passage dudit faisceau de lumière à travers un analyseur (SA) et dans un détecteur (DET).

FIG. 1

FIG. 2

FIG. 3a

FIG. 3b

FIG. 4a

FIG. 4b

FIG. 4c

FIG. 4d

FIG. 4e

FIG. 5a

FIG. 5b

FIG. 5c

FIG. 5d

FIG. 6

Na-Plate, AOI-75°, Tox-193.93A

FIG. 7a

Plate-Zero, AOI-75°, Tox-194.69A

FIG. 7b

VASE-C, AOI-75°, Tox-194.11A

FIG. 7c

No-Plate, AOI-30°, Tox-207.11A

FIG. 7d

Plate-Zero, AOI-30°, Tox-170.69A

FIG. 7e

VASE-C, AOI-30°, Tox-194.11A

FIG. 7f

FIG. 8

FIG. 9

EP 0 737 856 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5245478 A

### Non-patent literature cited in the description

- **CHINDAUDOM P et al.** Determination of the optical function n( lambda ) of vitreous silica by spectroscopic ellipsometry with an achromatic compensator. *APPLIED OPTICS,* 01 November 1993, vol. 32 (31), ISSN 0003-6935, 6391-6398
- **NEE S-M F.** Error reductions for a serious compensator imperfection for null ellipsometry. *JOURNAL OF THE OPTICAL SOCIETY OF AMERICA A,* February 1991, vol. 8 (2), ISSN 0740-3232, 314-321
- **RAUH M. et al.** Ellipsometric studies on the oxidation of thin copper films. *THIN SOLID FILMS,* 12 October 1993, vol. 233 (1-2), ISSN 0040-6090, 289-292